(19) Europäisches Patentamt
European Patent Office
Office européen des brevets

(11) **EP 1 456 727 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**14.06.2017 Patentblatt 2017/24**

(45) Hinweis auf die Patenterteilung:
**18.10.2006 Patentblatt 2006/42**

(21) Anmeldenummer: **02796657.1**

(22) Anmeldetag: **17.12.2002**

(51) Int Cl.:
**G05D 23/00** *(2006.01)*

(86) Internationale Anmeldenummer:
**PCT/EP2002/014395**

(87) Internationale Veröffentlichungsnummer:
**WO 2003/052536 (26.06.2003 Gazette 2003/26)**

(54) **VERFAHREN UND VORRICHTUNG ZUR ADAPTION DER WAERMELEISTUNG IN HEIZUNGSANLAGEN**

METHOD AND DEVICE FOR ADAPTING THE THERMAL OUTPUT IN HEATING INSTALLATIONS

PROCEDE ET DISPOSITIF PERMETTANT D'ADAPTER LA PUISSANCE THERMIQUE D'INSTALLATIONS DE CHAUFFAGE

(84) Benannte Vertragsstaaten:
**AT BE BG CH CY CZ DE DK EE ES FI FR GB GR IE IT LI LU MC NL PT SE SI SK TR**

(30) Priorität: **19.12.2001 DE 10162726**

(43) Veröffentlichungstag der Anmeldung:
**15.09.2004 Patentblatt 2004/38**

(73) Patentinhaber: **Techem Energy Services GmbH 65760 Eschborn (DE)**

(72) Erfinder: **KAHLER, Arne 12683 Berlin (DE)**

(74) Vertreter: **Keil & Schaafhausen Patent- und Rechtsanwälte PartGmbB Friedrichstrasse 2-6 60323 Frankfurt am Main (DE)**

(56) Entgegenhaltungen:
**EP-A- 0 308 848        EP-A- 0 594 885
EP-A- 0 594 886        EP-A1- 0 594 886
DE-A- 3 036 661        DE-A1- 3 643 434
US-A- 5 161 608**

EP 1 456 727 B2

**EP 1 456 727 B2**

**Beschreibung**

Die Erfindung betrifft ein Verfahren zur Adaption der Wärmeleistung in Heizungsanlagen mittels einer Wärmeleistungsregelung der Heizungsanlage, insbesondere durch Variation von Vorlauftemperatur und/oder Massenstrom, sowie eine Vorrichtung zur Durchführung dieses Verfahrens.

Das Verfahren kann bei der Regelung von Heizungsanlagen angewendet werden, in denen eine zentrale Erzeugung (bspw. mittels Brenner und Heizkessel) oder Bereitstellung (bspw. mittels Fernwärme) und eine dezentrale Verteilung von Heizwärme (bspw. über ein Rohrheizungssystem) erfolgt und in denen als Wärmeträger ein vorzugsweise flüssiges Medium verwendet wird. Der Massenstrom der Wärmeträgers wird durch die wärmeübertragenden Heizflächen von Heizelementen bspw. mittels Veränderung der Hubstellungen von Stellventilen beeinflusst, um eine Heizleistungsänderung an den wärmeübertragenden Heizflächen zu bewirken. Die Leistungsanpassung der zentralen Heizungsversorgung erfolgt in diesen Systemen häufig durch Veränderung der Vorlauftemperatur oder des Volumenstromes des flüssigen Transportmediums bzw. durch Kombination der Veränderung von Vorlauftemperatur und Volumenstrom.

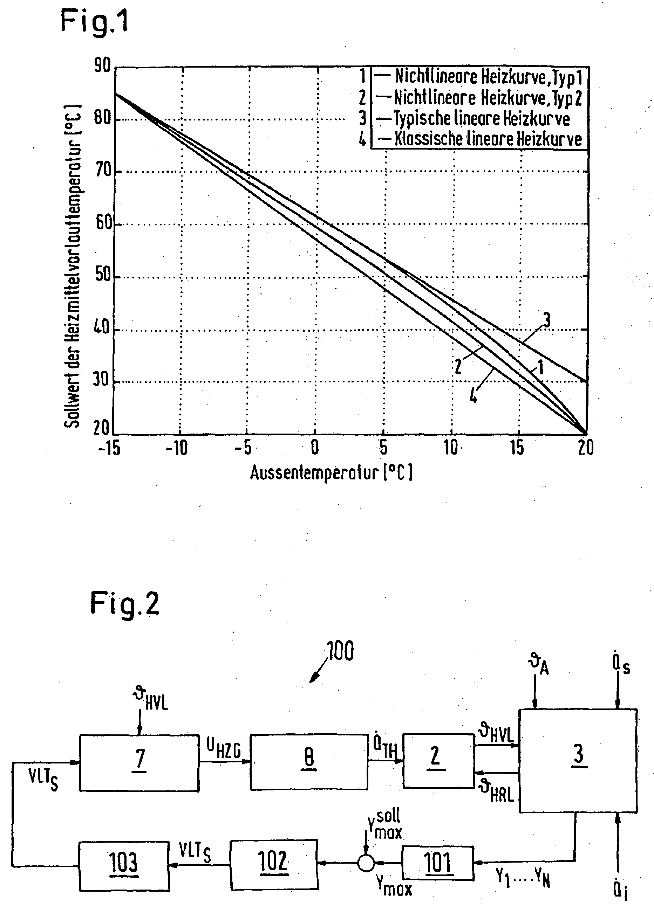

In der überwiegenden Zahl der bekannten Heizungsanlagen zur Wärmeversorgung von Gebäuden wird der Sollwert der Vorlauftemperatur des Heizmittels in Abhängigkeit der Außentemperatur gemäß einer der in Fig. 1 beispielhaft gezeigten stationären Heizungsfahrkurven geführt. Werden neben der Außentemperatur keine weiteren Führungsgrößen zur Regelung der Vorlauftemperatur berücksichtigt, führt diese Lösung in der Regel zu einem signifikanten Unterschied zwischen bereitgestellter momentaner Heizleistung und tatsächlichem aktuellen Gebäudewärmebedarf. Die Folge sind typischerweise zu hohe oder zu niedrige, also dem Bedarf nicht angepasste Systemtemperaturen, woraus für den praktisch weit verbreiteten Fall überhöhter Systemtemperaturen sowohl unnötige Energieverteilungsverluste als auch Überheizungszustände der Räume resultieren, die einen deutlichen Energiemehrverbrauch nach sich ziehen. Zu geringe Systemtemperaturen führen zu nicht ausreichenden Beheizungszuständen der Räume, also zu nicht erwünschtem Diskomfort. Auch der Einsatz einer Einzelraumtemperaturregelung in Kombination mit Stellventilen zur Beeinflussung des Heizmittelmassenstromes kann die Effekte einer nicht angepassten Vorlauftemperatur kaum kompensieren, da die Eingriffsmöglichkeit der Einzelraumregelung nur auf die Drosselung des Heizmittelstromes durch die wärmübertragenden Heizflächen beschränkt ist. Auch die Regelbarkeit der Raumtemperatur wird durch nicht angepasste Vorlauftemperaturen deutlich verschlechtert. So führt eine Überhöhung der Vorlauftemperatur infolge der dadurch erhöhten Rohrwärmeabgabe zu einer Verringerung des Regelbereiches der Einzelraumtemperaturregelung und eine zu geringe Vorlauftemperatur zu einem für das Erreichen der Solltemperatur nicht ausreichenden Regelbereich.

Aus der EP 0 282 886 B1 ist ein Verfahren zur Führung des Sollwertes der Vorlauftemperatur in Heizungsanlagen bekannt. Entsprechend dem Verfahrensvorschlag wird der Wärmeverluststrom im Heizkreis aus den stetig zu messenden physikalischen Größen Vor- und Rücklauftemperatur einschließlich Volumenstrom errechnet. Der Sollwert der Vorlauftemperatur wird aus dem errechneten Wärmeverluststrom im Heizkreis unter Berücksichtigung eines 3-dimensionalen Laststufenfeldes (Kennlinienfeld) ermittelt. Die praktische Einsetzbarkeit des Verfahrens wird jedoch unter anderem dadurch erschwert, dass eine aufwendige messtechnische Erfassung der relevanten Einflussgrößen erforderlich ist und außerdem das zu berechnende Laststufenfeld gebäudespezifisch, also nicht universell einsetzbar ist.

Bei den aus der EP 0 308 848 B2 bekannten Verfahren und Vorrichtung zur Steuerung der Temperatur des Heizmediums einer Umlaufheizung mit einer Minimaltemperaturbegrenzung werden in Abhängigkeit von gemessener Außen- und Heizmittelvorlauftemperatur unter Berücksichtigung einer Minimaltemperatur des Heizmittelvorlaufs sowohl die elektrische Leistung einer Heizmittelumwälzpumpe als auch die thermische Leistung des dazugehörigen Heizungsbrenners angepasst mit dem Ziel, den Heizungsbrennerbetrieb möglichst selten zu unterbrechen. Zu diesem Zweck wird der Sollwert des Heizmittelvorlaufs in Abhängigkeit der Außentemperatur gemäß einer klassischen Heizkurve eingestellt. Bei Annäherung der Heizmittelvorlauftemperatur an die Minimaltemperatur erfolgt eine Verringerung der elektrischen Leistung der Umwälzpumpe mittels Drehzahlreduzierung und außerdem eine Verringerung der thermischen Leistung des Brenners mittels Hubänderung eines Brennstoffzufuhrventils. Eine Wärmeleistungsadaption erfolgt also nur im Bereich der Minimaltemperatur, ansonsten erfolgt die Führung der Vorlauftemperatur gemäß klassischer Heizungsfahrkurve mit den zuvor beschriebenen Nachteilen.

Aus der EP 0 260 343 B1 sind ein Verfahren und eine Vorrichtung zur Temperaturregelung von Heizungs- und Kühlanlagen bekannt, dementsprechend die Solltemperatur einer Wärme- bzw. Kältequelle in Abhängigkeit einer als a priori bekannt vorausgesetzten Außentemperatur und einer weiteren gemessenen Referenztemperatur, wie z.B. der Raumlufttemperatur, geführt wird. Außerdem erfolgt eine Auswertung der Aufheiz- und Abkühlgeschwindigkeit des Wärme- bzw. Kältemediums, um daraus eine weitere Korrektur des Sollwertes der Wärme- bzw. Kältequelle vorzunehmen. Der Verfahrensvorschlag, aus Kostengründen auf einen Außentemperaturfühler zu verzichten und die Außentemperatur aus z.B. statistischen Auswertungen von verfügbaren Außentemperaturverläufen zu ermitteln, ist kaum praktikabel, da die Zuverlässigkeit dieser Verläufe hinsichtlich des Zeitverhaltens nur gering ist. Dabei wird der wirtschaftliche Effekt, der aus dem Verzicht auf den Außentemperaturfühler resultiert, angesichts der Gesamtkosten der Heizungsanlage überschätzt.

In dem Aufsatz D. Pfannstiel, "Einsatz adaptiver und fuzzy-basierter Regelungsstrategien in der Heizungstechnik", atp 1995, S. 42 bis 49, wird ein Verfahren zur wärmebedarfsgeführten Wärmeleistungsadaption mittels Führung des Vorlauftemperatursollwertes für Kesselsteuerungen vorgestellt, das die dynamische Änderung der Kesselwassertemperatur bewertet, woraus der momentane und der durchschnittliche Energieverbrauch, sowie die Wärmetendenz ermittelt werden. Mittels einer komplexen Fuzzy-Logic mit 405 Regeln wird der momentane Wärmebedarf und schließlich der Vorlauftemperatursollwert ermittelt. In der Veröffentlichung J. Ohl, "Untersuchung verschiedener Regelungskonzepte für Heizungsanlagen mit Brennwertkesseln", Fortschrittberichte VDI, Reihe 6, Nr. 429, Dissertation, Technische Universität Darmstadt, 1999, wird ein weiteres ähnliches Verfahren dargestellt. Ausgehend von dem zu messenden Heizmittelvolumenstrom und der zu messenden Heizmittelrücklauftemperatur wird unter Berücksichtigung des Vorlauftemperatursollwertes mittels Fuzzy-Logic (27 Regeln) auf die aktuelle Wärmebedarfstendenz geschlossen, aus der ein aktueller, korrigierter Sollwert der Vorlauftemperatur berechnet wird.

Allen vorstehend genannten Verfahren ist gemeinsam, dass die Führung des Sollwertes der Vorlauftemperatur entweder auf Messdaten der Wärme- bzw. Kälteerzeugeranlagen oder auf Raumtemperaturmesswerten basiert. Die optimale Vorlauftemperatur für eine Heizungsanlage kann daraus jedoch nur schwer ermittelt werden.

Die Aufsätze S. Baumgarth, "Strategien zur energieoptimalen Heizungsregelung", HLH 1991, S. 315 bis 318, und "Regelungsstrategien für Einzelraumregelung", atp, Nr. 37, 1995, S. 29 bis 35, sehen die Nutzung eines Kommunikationsverbundes der zentralen Regelung der Wärme- bzw. Kälteerzeugung mit einer elektronischen Einzelraumregelung vor. Dabei kann die tatsächlich angeforderte Heizlast eines Raumes aus der Heizkörperventilstellung ermittelt werden, die aus den Positionsrückmeldungen einer elektronischen busfähigen Einzelraumregelung gewonnen wird. Zur Führung des Sollwertes der Vorlauftemperatur wird der Raum mit größtem Ventilhub ausgewählt. Der Sollwert der Vorlauftemperatur wird nun so eingestellt, dass der größte Ventilhub 90% beträgt. Im Ergebnis erhält man das in Fig. 2 dargestellte Regelungssystem. Weitere Verfahren, die die Hubposition des Heizkörperventils mit größtem Ventilhub auswerten, werden in dem Aufsatz S. Baumgarth, "Einzelraumregelung mit dem EIB", HLH 2000, S. 42 bis 47, und der DE 30 366 61 C1 dargestellt. In Analogie zu dem vorstehend beschriebenen Verfahren wird hier vorgeschlagen, den Raum als Führungsraum auszuwählen, dessen Heizkörperventil einen Hub von 100% meldet, und den Sollwert der Vorlauftemperatur in äquidistanten Zeitschritten um einen festen Betrag zu senken bzw. zu heben bzw. in Abhängigkeit der Regelabweichung der Raumtemperatur im Führungsraum die Steigung der Heizungsfahrkurve zu verändern oder auch eine Parallelverschiebung der Heizkurve durchzuführen.

Nachteilig an diesen Lösungen ist, dass zur Führung des Vorlauftemperatursollwertes nur der Raum ausgewählt wird, der momentan den größten Heizkörperventilhub liefert. Das führt insbesondere in Mehrfamilienhäusern dazu, dass sich die thermische Leistung der gesamten Heizungsversorgung an dem Raum mit dem höchstem thermischen Leistungsbedarf orientiert, woraus hohe Systemtemperaturen und daraus in Folge erhöhte konvektive und Strahlungswärmeverluste resultieren. Dies bedeutet einen unnötigen thermischen Energiemehrverbrauch im gesamtem Gebäude.

Aus der EP 0 594 886 A1 ist ein Verfahren zum Regeln des einzelnen Räumen einer Zentralheizungsanlage zugeführten mittleren Wärmemengenstroms bekannt, bei dem für die einzelnen Räume der Öffnungsgrad von Heizkörperstellventilen und eine Regelabweichung der Raumtemperatur bestimmt werden, wobei aus dem Öffnungsgrad und der Regelabweichung ein Wärmebedarfssignal für die einzelnen Räume ermittelt wird. Das Wärmebedarfssignal der einzelnen Räume wird separiert nach positiven und negativen Werten gewichtet aufsummiert und daraus ein Leistungsänderungssignal nach einer festen Rechenvorschrift berechnet, das eine Anpassung des Wärmemengenstroms durch Variation der Durchflussgeschwindigkeit und/oder der Vorlauftemperatur des Wärmeträgermediums bewirkt. Bei dem vorgeschlagenen Verfahren wird zwar der Wärmebedarf der einzelnen Räume berücksichtigt, aus dem dann durch gewichtete Mittelwertbildung ein Gesamtbedarf errechnet wird, der zur Führung der Heizungsanlage dient. Es besteht jedoch der Nachteil, dass aufgrund der festen Rechenvorschrift eine Anpassung an spezielle Bedürfnisse nicht mehr möglich ist und der zugrundegelegte Wärmebedarf sowohl von der Öffnung der Stellventile der einzelnen Heizkörper als auch von der Regeldifferenz der entsprechenden Einzelraumtemperaturregelung abhängt. Durch die Verknüpfung mit der festen Rechenvorschrift kann so eine regelungstechnisch kaum beherrschbare Rückkopplung erzeugt werden, die zu einer Instabilität (Schwingungsneigung) der Wärmeleistungsanpassung und schlussendlich der Raumregelung führt.

Aufgabe der vorliegenden Erfindung ist es daher, eine Heizungsregelung vorzuschlagen, bei der die Wärmeleistung der Heizungsanlage besser eingestellt und an den tatsächlichen Wärmebedarf angepasst werden kann.

Diese Aufgabe wird bei einem Verfahren der eingangs genannten Art mit den Merkmalen des Anspruchs 1 gelöst. Es ist vorgesehen, dass eine Versorgungszustandsregelung, insbesondere ein Versorgungszustandsadaptionsmodul, vorgesehen ist, wodurch ein den Wärmebedarf der Räume berücksichtigender Heizkreis- oder Gebäudeversorgungszustand als Regelgröße mit einem vorgebbaren Sollwert für den Heizkreis- oder Gebäudeversorgungszustand verglichen und daraus ein Sollwert und/oder ein Korrekturwert für die Wärmeleistungsregelung ermittelt wird.

Die Versorgungszustandsregelung ist eine zusätzliche, der eigentlichen Wärmeleistungsregelung der Heizungsanlage vorgeschaltete Regelung, die als Regelgröße einen aus dem tatsächlichen Wärmebedarf der einzelnen Räume abgeleiteten Heizkreis- oder Gebäudeversorgungszustand verwendet. Dieser ermittelte Heizkreis- oder Gebäudeversorgungszustand wird mit einem Sollwert für den Heizkreis- oder Gebäudeversorgungszustand verglichen und dabei in eine Stellgröße der Versorgungszustandsregelung, den Sollwert für die Wärmeleistungsregelung, umgerechnet. Diese separate Regelung des tatsächlichen Versorgungszustands ermöglicht es, für das gesamte Gebäude oder einzelne Heizkreise einen eher niedrigeren Sollwert für den Versorgungszustand (Energieeinsparung) oder einen eher höheren Sollwert für den Versorgungszustand (Komfort) vorzugeben und diese Vorgaben bspw. auch zeitabhängig zu variieren. Dadurch wird eine Beeinflussbarkeit der Wärmeleistung erreicht, die durch die Heizungsanlage in dem jeweiligen Heizkreis bzw. im gesamten Gebäude angeboten wird. Die Wahl eines bestimmten Vorgabewertes für die Regelgröße Heizkreis- oder Gebäudeversorgungszustand erlaubt so in einfacher Weise eine Beeinflussung der Balance zwischen "Komfort" und "Energieeinsparung" für das gesamte Gebäude oder einen von einem Heizkreis versorgten Gebäudeteil, wobei eine gewisse Regelungsbreite für die Einzelraumtemperaturregelung erhalten bleibt. Mit dem erfindungsgemäßen Verfahren kann daher aufgrund der vorgelagerten Versorgungszustandsregelung flexibel auf Änderungen im Wärmebedarf des Gebäudes reagiert werden, ohne dass eine zufällig und unbeabsichtigt große Ventilöffnung in nur einem Raum zu stark ins Gewicht fällt.

In Heizungsanlagen, deren Wärmeleistungsregelung die externe Aufschaltung eines Sollwertes nicht ermöglicht, jedoch die Aufschaltung eines Korrektursignals zulässt, ist erfindungsgemäß vorgesehen, dass der Sollwert als Korrekturwert des Sollwertes einer Basis-Heizungsfahrkurve der externen Wärmeleistungsregelung berechnet wird. Dazu wird durch den Regelalgorithmus der Versorgungszustandsregelung anstelle des instationären Sollwertes für die Wärmeleistungsregelung ein instationärer, d.h. insbesondere zeitlich veränderlicher Korrekturwert berechnet. Die dafür notwendige Modifizierung der Versorgungszustandsregelung besteht also in der Anpassung der Regelverstärkung.

Um einen aktuellen Heizkreis- oder Gebäudeversorgungszustand zu ermitteln, der den tatsächlichen Wärmebedarf für den Heizkreis oder das gesamte Gebäude repräsentiert, wird erfindungsgemäß die Hubposition der Stellventile aller zur raumweisen Regelung der Raumtemperatur beitragenden Heizelemente des Heizkreises oder Gebäudes ausgewertet und daraus der aktuelle Heizkreis- oder Gebäudeversorgungszustand abgeleitet. Damit wird unter Ausnutzung eines Kommunikationsverbundes bspw. einer vernetzten elektronischen Einzelraumregelung der Wärmebedarf der einzelnen Räume, der bspw. aus den Ventilhüben der Stellventile der Heizkörper berechnet wird, verwendet, um daraus den tatsächlichen Wärmebedarf des Gebäudes oder Heizkreises zu ermitteln, statt einen Hubsollwert von bspw. 90% für den Raum mit dem größten Ventilhub vorzugeben. Für diesen Raum ist dann eine vernünftige Temperaturregelung nicht mehr möglich, da in Heizungsanlagen unter Praxisbedingungen in der Regel die Ventilautorität der Heizkörperventile kleiner 0.5 ist, woraus entartete Kennlinien resultieren. Die Folge ist, dass bei einem Ventilhub größer 80% praktisch die gesamte Heizleistung zur Verfügung steht und eine Heizleistungsreserve, wie sie für Ausregelungsprozesse erforderlich ist, nicht mehr vorliegt. Da das erfindungsgemäße Verfahren nun auf den tatsächlichen Wärmebedarf im gesamten Heizkreis oder Gebäude abstellt, arbeitet die Regelung wesentlich angepasster und robuster.

Eine besonders vorteilhafte Ausgestaltung des erfindungsgemäßen Verfahrens sieht vor, zunächst aus der Hubposition der Stellventile der einem Raum zugeordneten Heizelemente mit einer Bewertungsfunktion je einen Raumversorgungszustand zu berechnen und aus den Raumversorgungszuständen aller oder speziell ausgewählter Räume entsprechend einer vorgegebenen bzw. vorgebbaren Logik den Heizkreis- oder Gebäudeversorgungszustand zu ermitteln. Dabei wird zunächst jedes Stellventil gedanklich einem Raumregelkreis zugeordnet. Das ist insofern sehr zweckmäßig, als die Hubposition jedes Stellventils der Stellgröße eines Raumtemperaturreglers folgt, der den Sollwert der Hubposition des Stellventils (Stellgröße) aus dem Soll- und Istwert einer zugeordneten Raumtemperatur ermittelt. Da in dem Istwert der Raumtemperatur alle thermisch relevanten Einflussgrößen, wie etwa Außentemperatur, solare und interne Gewinne, abgebildet sind, repräsentiert die resultierende geregelte Hubposition des Stellventils einen genauen Wert für den aktuellen Wärmebedarf in diesem Raum, aus dem ein zuverlässiger Raumversorgungszustand abgeleitet werden kann. Aus diesen Raumversorgungszuständen lässt sich dann ein exakter Heizkreis- bzw. Gebäudeversorgungszustand ermitteln.

Dazu werden die Raumversorgungszustände erfindungsgemäß in Über- und Unterversorgungszustände eingeteilt und separat gemittelt. Nach der arithmetischen und/oder gewichteten Mittelung erhält man im Ergebnis einen mittleren Raumüberversorgungs- und einen mittleren Raumunterversorgungszustand, die ein Maß dafür sind, wie viele Räume in welchem Maße über- bzw. unterversorgt sind.

Die Raumversorgungszustände werden erfindungsgemäß mit einer Fuzzy-Zugehörigkeitsfunktion bewertet und die Regelgröße Heizkreis- bzw. Gebäudeversorgungszustand durch nachfolgende Fuzzy-Inferenzbildung und Defuzzyfizierung, vorzugsweise mittels einer Schwerpunktmethode, wertmäßig berechnet und auf einen bestimmten Wertebereich abgebildet. Dabei können bspw. positive Werte des Heizkreis- bzw. Gebäudeversorgungszustandes eine Überversorgung und negative Werte eine Unterversorgung bedeuten. Der Wert 0 entspricht einem idealen Versorgungszustand des Gebäudes. Prinzipiell kann eine Mittelwertbildung der Raumversorgungszustände vor oder nach der Fuzzyfizierung ausgeführt werden. Wenn die Mittelwertbildung vor der Fuzzyfizierung ausgeführt wird, ist der Rechenaufwand am kleinsten.

Um den Wärmekomfort der Heizungsregelung zu erhöhen, ist erfindungsgemäß vorgesehen, dass die Unterversorgungszustände stärker gewichtet werden als die Überversorgungszustände.

Zur Ausfilterung hochfrequenter Bestandteile wird der ermittelte Wert des Heizkreis- bzw. Gebäudeversorgungszustandes vorzugsweise durch gleitende Mittelwertbildung gefiltert, indem der jeweils aktuelle Berechnungswert der Regelgröße Heizkreis- bzw. Gebäudeversorgungszustand auf einen entsprechenden Filter geschaltet wird.

Nach dem erfindungsgemäßen Verfahren ist dann vorgesehen, dass in einem Regler der Versorgungszustandsregelung aus der Regelabweichung zwischen einem vorgebbaren Sollwert des Heizkreis- bzw. Gebäudeversorgungszustandes und dem ermittelten Wert des Heizkreis- bzw. Gebäudeversorgungszustandes als Stellgröße für die Wärmeleistungsregelung ein Sollwert der Vorlauftemperatur bestimmt wird. Als Algorithmus des Reglers kann sowohl ein klassischer P-, besser ein PI- oder PID-Algorithmus, als auch bspw. ein PI-ZustandsAlgorithmus eingesetzt werden. Im Sinne einer stets hohen Regelgüte ist der Einsatz parameteradaptiver Algorithmen zweckmäßig.

Um die Zeitdauer des Einfahrprozesses der Versorgungszustandsregelung in den optimalen Arbeitspunkt nach Einschaltung zu verkürzen, wird der Startwert für den Sollwert der Wärmezustandsregelung erfindungsgemäß von der Versorgungszustandsregelung aus einer vorzugsweise außentemperaturgeführten Heizungsfahrkurve, insbesondere unter Berücksichtigung der aktuellen Außentemperatur, ermittelt.

Ebenso kann der Sollwert für Wärmeleistungsregelung aus einer vorzugsweise außentemperaturgeführten Heizungsfahrkurve, insbesondere unter Berücksichtigung der aktuellen Außentemperatur, ermittelt werden, wenn der Heizkreis- oder Gebäudeversorgungszustand insbesondere aufgrund einer Kommunikationsunterbrechung bspw. zu den Einzelraumregelungen (Raumtemperaturregelungen) oder einer sonstigen Störung nicht ermittelbar ist. Eine Kommunikationsunterbrechung ist bspw. aufgrund von Wartungsphasen, Störungen im Funkverkehr oder sonstigen Ausfällen in der Praxis nicht ganz unwahrscheinlich.

Mit dem Ziel, diese Heizungsfahrkurve möglichst optimal an den typischen Gebäudewärmebedarf anzupassen, wird die vorzugsweise außentemperaturgeführte Heizungsfahrkurve nach abgeschlossenem Einfahrprozess der Versorgungszustandsregelung unter Berücksichtigung der dem optimalen Sollwert für die Wärmeleistungsregelung entsprechenden Stellgrößen interpolierend optimiert. Dadurch wird eine nicht-lineare instationäre Heizungsfahrkurve generiert, die dem außentemperaturabhängigen typischen Gebäudewärmebedarf optimal angepasst ist. Somit wird der Einfahrprozess des Reglers nach Betriebsunterbrechungen in Verbindung mit z. B. wartungsbedingten Arbeiten an der Heizungsanlage oder nach der heizfreien Zeit weiter verkürzt. Der Einfahrprozess des Reglers kann bspw. als abgeschlossen betrachtet werden, wenn die Regelabweichung des Gebäudeversorgungszustandes eine Restschwingung aufweist, deren Amplitude kleiner ist als ein parametrierbarer Wert von bspw. 5%.

Die Aufgabe wird erfindungsgemäß auch durch eine Vorrichtung mit den Merkmalen des Anspruchs 11 zur Durchführung des zuvor beschriebenen Verfahrens mit einer Wärmeleistungsregelung zur Vorgabe von Vorlauftemperatur und/oder Massenstrom einer Heizungsanlage gelöst, die eine Versorgungszustandsregelung, insbesondere ein Versorgungszustandsadaptionsmodul, aufweist, wodurch ein den Wärmebedarf der Räume berücksichtigender Heizkreis- bzw. Gebäudeversorgungszustand als Regelgröße mit einem vorgebbaren Sollwert für den Heizkreis- bzw. Gebäudeversorgungszustand verglichen und daraus ein Sollwert und/oder Korrekturwert für die Wärmeleistungsregelung ermittelt wird.

Die Vorrichtung weist einen Versorgungszustandsanalysator zur Ermittlung eines Heizkreis- oder Gebäudeversorgungszustands auf, der aus der Hubposition der Stellventile aller zur raumweisen Regelung der Raumtemperatur beitragenden Heizelemente des Heizkreises oder Gebäudes den tatsächlichen Heizkreis- oder Gebäudeversorgungszustand bestimmt.

Dazu ist die Vorrichtung vorzugsweise über eine Kommunikationsverbindung mit mindestens einer elektronischen Einzelraumregelung oder mindestens einem Stellventil eines Heizelementes verbunden, um über diese Kommunikationsverbindung die Hubposition der Stellventile zu erhalten.

Insbesondere für einen Ausfall der Kommunikationsverbindung oder den Einfahrprozess des Reglers ist ein Außentemperatursensor an die Vorrichtung anschließbar, um den gemessenen Temperaturwert zur Regelung anhand einer Heizungsfahrkurve zu verwenden.

Ferner ist erfindungsgemäß vorgesehen, dass die Vorrichtung an einen Korrektursignalanschluss eines externen Heizungsreglers, insbesondere eines Vorlauftemperatur- oder Volumenstromreglers, anschließbar ist, wenn dieser die Aufschaltung eines externen Sollwertes nicht ermöglicht. Damit kann die Vorrichtung als Zusatzregelung auch zusammen mit älteren Heizungsanlagen und deren Standardregelung verwendet werden.

Nachfolgend wird die vorliegende Erfindung anhand von Ausführungsbeispielen und der Zeichnung näher beschrieben. Dabei gehören alle beschriebenen und/oder bildlich dargestellten Merkmale für sich oder in beliebiger Kombination zum Gegenstand der Erfindung, unabhängig von ihrer Zusammenfassung in den Ansprüchen oder deren Rückbeziehung.

Es zeigen:

Fig. 1 typische stationäre, lineare und nicht-lineare Heizungsfahrkurven zur Vorgabe eines Sollwertes der Heizmittelvorlauftemperatur;

Fig. 2 einen Regelkreis zur Vorlauftemperaturführung gemäß dem Stand der Technik;

Fig. 3    einen Regelkreis für das Verfahren gemäß der vorliegenden Erfindung zur Adaption der Wärmeleistung von Heizungsanlagen;

Fig. 4    ein Schema des erfindungsgemäßen Versörgungszustandesanalysators im Detail;

Fig. 5    eine Kennlinie zur Ermittlung des Raumversorgungszustandes gemäß der vorliegenden Erfindung;

Fig. 6    Zugehörigkeitsfunktionen zur Bewertung der mittleren Raumversorgungszustände;

Fig. 7    eine Tabelle mit der Zuordnung der Zugehörigkeitsfunktionen zu den linguistischen Wertebereichen der Gebäudeversorgungszustände gemäß der vorliegenden Erfindung;

Fig. 8    ein Schema des erfindungsgemäßen Versorgungszustandsadaptionsmoduls gemäß einer ersten Ausführungsform im Detail und

Fig.9    ein Schema des erfindungsgemäßen Versorgungszustandsadaptionsmoduls gemäß einer zweiten Ausführungsform im Detail.

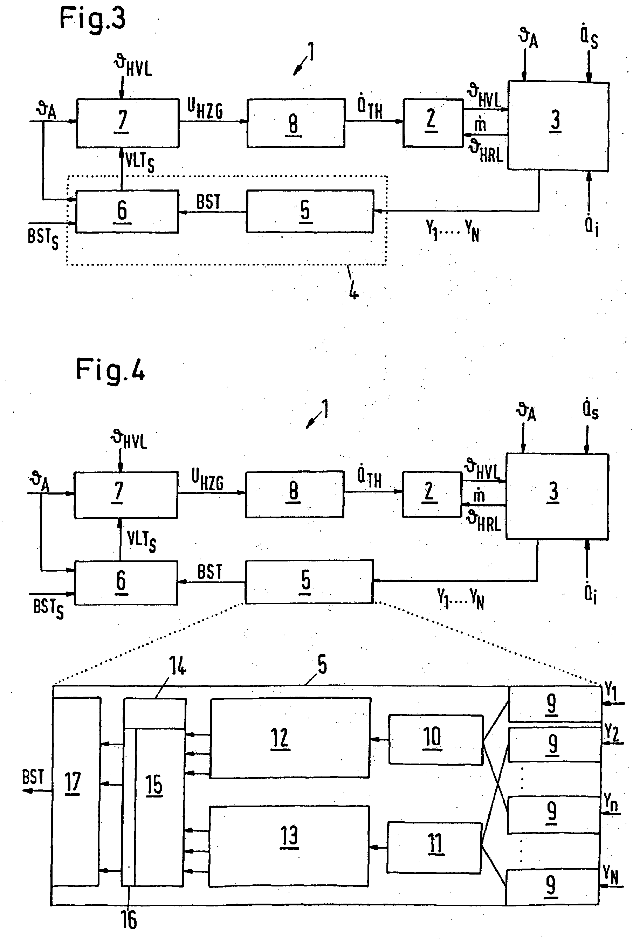

Der in Fig. 3 dargestellte Regelkreis 1 zur Adaption der Wärmeleistung in Heizungsanlagen dient zur Regelung einer Gebäudeheizungsanlage 2, die über ein Rohrsystem mit Heizelementen, wie Heizkörpern, Fußbodenheizung oder dgl., der zu beheizenden Räume verbunden ist. In den Räumen sind als Einzelraumregelungen dienende Raumtemperaturregelungen 3 vorgesehen, die durch Regelung bzw. Verstellen der Hubposition der Stellventile der Heizelemente die in den Räumen gewünschte Temperatur einstellen. Diese Einzelraumregelungen berücksichtigen beispielsweise die Außentemperatur $\vartheta_A$, die solare Wärmeleistung $\dot{Q}_s$ und die interne Wärmeleistung $\dot{Q}_r$. Für die vorliegende Erfindung ist jedoch nicht ausschlaggebend, aufgrund welcher Eingangsgrößen die Raumtemperaturregelungen 3 die Temperatur in den zu heizenden Räumen regeln. Daher kann eine Raumtemperaturregelung 3 alternativ oder zusätzlich von anderen Eingangsgrößen abhängen.

Die Einzelraumregelung der Raumtemperatur erfolgt durch Regelung bzw. Verstellen der Ventilstellungen $Y_1$ bis $Y_N$ der insgesamt N Heizelemente in den zu beheizenden Räumen. Die vorzugsweise miteinander vernetzten elektronischen Raumtemperaturregelungen 3 geben den Wert der Hubposition der Ventile Y der jeweiligen Heizelemente an ein in dem Regelkreis 1 angeordnetes Wärmeleistungsadaptionsmodul 4 weiter, das auf Basis eines elektronischen Gerätes realisiert werden kann.

In dem Wärmeleistungsadaptionsmodul 4 befinden sich ein Versorgungszustandsanalysator 5 und ein Versorgungszustandsadaptionsmodul 6, die aus den als Rauminformation dienenden Ventilstellungen $Y_1$ bis $Y_N$ den Sollwert für die Vorlauftemperatur $VLT_S$ ermitteln, den sie einer Wärmeleistungsregelung 7 zuleiten. Die Wärmeleistungsregelung 7 erzeugt unter Beachtung der Außentemperatur $\vartheta_A$ und der Vorlauftemperatur $\vartheta_{HVL}$ die Stellgröße $U_{HZG}$ zur Steuerung des Wärmeübertragers oder -erzeugers 8 der Gebäudeheizungsanlage 2. Der Wärmeübertrager oder -erzeuger 8 kann bspw. eine Vorrichtung zur Ankopplung an ein Fernwärmesystem, ein Gas- oder Ölbrenner, eine Brennstoffzelle oder jede andere zur Erzeugung oder Übertragung von Wärme geeignete Vorrichtung sein. Die dabei durch den Wärmeübertrager- oder Erzeuger 8 zur Verfügung gestellte Heizungswärmeleistung $\dot{Q}_{TH}$ wird über die Gebäudeheizungsanlage 2 an die einzelnen Heizelemente weitergeleitet. Die Regelung erfolgt dabei durch eine Variation der Vorlauftemperatur $\vartheta_{HVL}$ und/oder des Massenstroms $m$(Vorlauftemperatur- und/oder Volumenstromregelung).

Der Unterschied zu dem in Fig. 2 dargestellten Regelkreis 100 zur Vorlauftemperaturführung gemäß dem Stand der Technik liegt in dem Wärmeleistungsadaptionsmodul 4, das eine vorgeschaltete Versorgungszustandsregelung 6 darstellt. Eine solche zusätzliche Regelung ist in dem Regelkreis 100 gemäß Fig. 2 nicht vorgesehen ist. Zur Verdeutlichung wird nachfolgend der Regelkreis 100 aus dem Stand der Technik kurz beschrieben. Die vergleichbar arbeitenden Module des Regelkreises 100 sind mit denselben Bezugszeichen bezeichnet und werden nicht näher erläutert.

Die von den Raumtemperaturregelungen 3 weitergeleiteten Ventilstellungen $Y_1$ bis $Y_N$ werden in einem Maximumanalysator 101 derart ausgewertet, dass die maximale Ventilstellung $Y_{max}$ ausgewählt und unter Berücksichtigung eines maximalen Sollhubwertes für die Ventilstellung $Y_{max}{}^{soll}$ an eine Sollwertberechnungseinheit 102 weitergeleitet wird, die einen Sollwert für die Vorlauftemperatur $VLT_S$ berechnet. Um kleine Schwankungen in dem Sollwert für die Vorlauftemperatur $VLT_S$ zu glätten, wird der Sollwert $VLT_S$ der Wärmeleistungsregelung 7 durch ein entsprechendes Filter 103 geleitet. Eine vorgeschaltete Versorgungszustandsregelung 6 wie bei der vorliegenden Erfindung ist nicht vorgesehen.

Durch das Versorgungszustandsadaptionsmodul 6 ist es möglich, aus dem Gebäudeversorgungszustand BST und einem von außen vorgebbaren Sollwert für den Gebäudeversorgungszustand $BST_s$ einen Sollwert für die Vorlauftemperatur $VLT_s$ zu ermitteln, der optimal an den Wärmebedarf des Gebäudes angepasst ist.

Die Funktionsweise des Versorgungszustandsanalysators 5 und des Versorgungszustandsadaptionsmoduls 6 werden nachfolgend anhand der Fig. 4 bis 9 detailliert beschrieben. Der Aufbau des Versorgungszustandsanalysators 5 und des Versorgungszustandsadaptionsmoduls 6 kann durch elektronische Bauteile einfach realisiert werden. Insbesondere können beide Module 5, 6 in nur einem Mikroprozessor enthalten sein, sodass in der elektronischen Realisierung nicht notwendigerweise zwei Module erkennbar sind.

Aufgabe des in Fig. 4 detailliert dargestellten Versorgungszustandsanalysators 5 ist die Ermittlung der Regelgröße Heizkreis- oder Gebäudeversorgungszustand BST. Zu diesem Zweck erfolgt in den Bewertungsmodulen 9 eine Bewertung der Hubposition Y aller Stellventile 1 bis N, die zur raumweisen Regelung der Raumtemperatur beitragen. Dazu gehören alle Heizkörperstellventile, aber auch Stellventile von Flächenheizungssystemen wie etwa Fußbodenheizungssystemen oder Systemen mit thermischer Bauteilaktivierung.

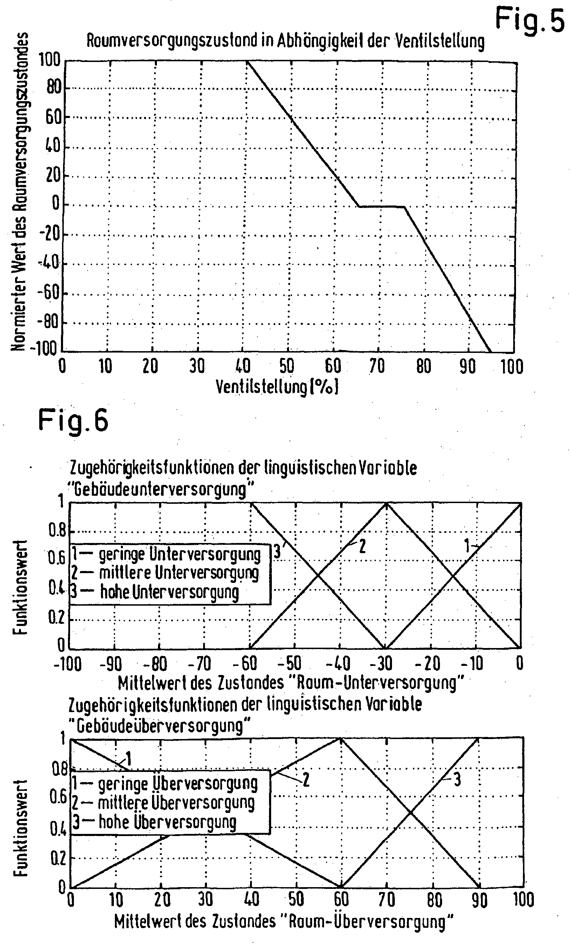

Die Bewertung erfolgt anhand einer in Fig. 5 beispielhaft dargestellten Kennlinie zur Ermittlung eines Raumversorgungszustandes aus der Hubposition Y eines Heizkörperventils. Dazu wird zunächst jedem Stellventil gedanklich ein Raumregelkreis zugeordnet. Aus jeder Ventilhubposition Y, die aus Positionsrückmeldungen der miteinander vernetzten elektronischen Einzelraumtemperaturregelungen 3 gewonnen wird, wird zur Ermittlung eines Raumversorgungszustands, der einem Versorgungszustand eines Raumregelkreises entspricht, aus der Kennlinie gemäß Fig. 5 für die konkrete Ventilstellung Y ein normierter Wert des Raumversorgungszustandes abgelesen. Die Implementierung dieser als Bewertungsfunktion dienenden Kennlinie kann auch mit anderen ähnlichen Funktionsverläufen erfolgen. Sinnvoll ist eine Parametrierbarkeit dieser Funktion, die insbesondere die Wählbarkeit bzw. auch die automatische Adaptionsfähigkeit des Nullpunktes des Raumversorgungszustandes in Abhängigkeit der Ventilkennlinienentartung, also in Abhängigkeit der Ventilautorität, erlaubt. Ist der ermittelte Raumversorgungszustand positiv, gilt der entsprechende Raumregelkreis als überversorgt; ist der Raumversorgungszustand negativ, gilt der entsprechende Raumregelkreis als unterversorgt. Ein Raumversorgungszustand von Null bedeutet, dass der Regelkreis weder über- noch unterversorgt, also optimal versorgt ist.

Die Über- und Unterversorgungszustände der Ventilstellungen Y werden separiert und in einem Mittlungsmodul für Überversorgungszustände 10 und einem Mittlungsmodul für Unterversorgungszustände 11 getrennt voneinander arithmetisch oder auch gewichtet gemittelt, sodass man im Ergebnis einen mittleren Raumüberversorgungs- und einen mittleren Raumunterversorgungszustand erhält. Diese werden in einem Logik-Modul 12 für Überversorgungszustände und einem Logik-Modul 13 für Unterversorgungszustände bewertet.

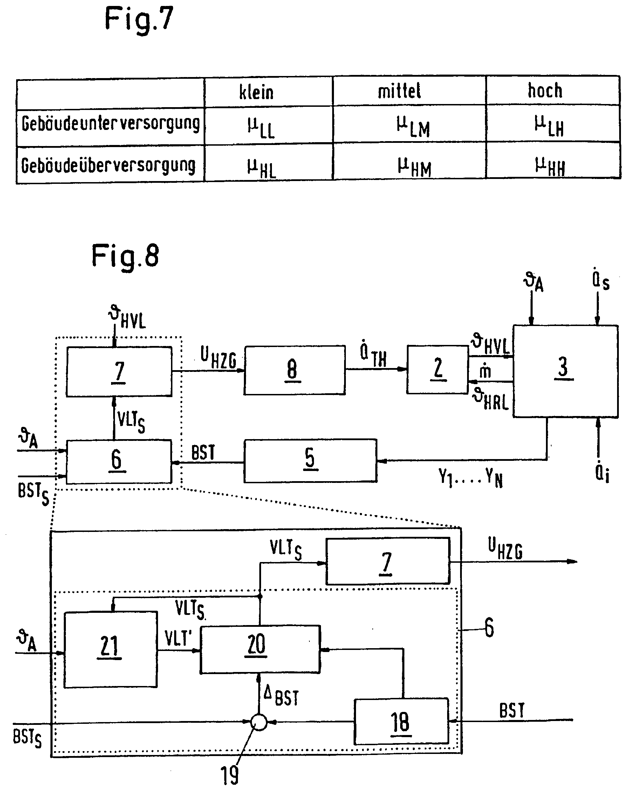

Die Bewertung erfolgt anhand der in Fig. 6 dargestellten Fuzzy-Zugehörigkeitsfunktionen, indem die dargestellten Funktionswerte den in der Tabelle gemäß Fig. 7 dargestellten Werten $\mu_{LL}$, $\mu_{LM}$, $\mu_{LH}$, $\mu_{HL}$, $\mu_{HM}$ und $\mu_{HH}$ zugeordnet werden. Diese Zugehörigkeitsfunktionswerte $\mu$ werden einer Fuzzy-Inferenz 14 übermittelt, deren Regelbasis 15 aus bspw. sieben Fuzzy-Regeln besteht. In der Aggregation 16 werden dann die Größen $BST_1$ bis $BST_7$ zusammen mit ihrem jeweiligen Erfüllungsgrad $\eta_l$ errechnet.

In der nachfolgenden Defuzzyfizierung 17 wird mittels einer Schwerpunktmethode die Regelgröße Gebäude bzw. Heizkreisversorgungszustand BST wertmäßig berechnet und auf den Wertebereich -100 bis +100 abgebildet. Der Schwerpunkt wird dabei gemäß der Formel

$$BST = \frac{\sum\limits_{i=1}^{7} BST_i \cdot \eta_l}{\sum\limits_{l=1}^{7} \eta_l},$$

mit $\eta_i$ Erfüllungsgrad der Regel i, i=1 ... 7,
berechnet.

Die Regelbasis mit sieben Regeln wurde so gewählt, dass Unterversorgungszustände stärker gewichtet (bestraft) werden als Überversorgungszustände. Diese Regelbasis ist für eine Vielzahl von Gebäudeheizungsanlagen 2 geeignet. Die Erfindung ist jedoch nicht auf die konkret dargestellte Logik beschränkt. Vielmehr ist jede Art von Logik, insbesondere basierend auf einer Fuzzy-Logik, geeignet, das erfindungsgemäße Verfahren umzusetzen, sofern durch sie die Hubposition Y aller Stellventile der zur raumweisen Regelung der Raumtemperatur beitragenden Heizelemente bewertet bzw. ausgewertet wird, um die Regelgröße Heizkreis- oder Gebäudeversorgungszustand BST aus allen Hubpositionen Y zu erhalten. Die Reihenfolge der Mittlungsmodule 10, 11 für die Mittelwertbildung und der Logikmodule 12, 13 für die Fuzzyfizierung kann auch umgekehrt werden, wobei allerdings die dargestellte Variante mit dem geringsten Rechenaufwand realisierbar ist. Insbesondere ist es erfindungsgemäß auch möglich, bspw. wohnungsbezogene Heizkreis-Versorgungszustände unter Nutzung von Fuzzyfizierung und Defuzzyfizierung in entsprechenden Logikmodulen 12, 13 bis 17 bspw. noch dezentral in einer Wohnungsregelung zu bilden und erst anschließend eine Mittelung über diese Heizkreis-Versorgungszustände in einem zentralen Versorgungszustandsanalysator durchzuführen. Diese Ausführungsvariante hat den Vorteil, dass insgesamt weniger Signale von der Einzelraumtemperaturregelung zu der Versorgungszustandsregelung 6 übertragen werden müssen, da mehrere Ventilstellungen bspw. wohnungs- oder raumweise zu einer Versorgungszustandsgröße zusammengefasst werden. In dieser Variante ist also der Kommunikationsaufwand geringer.

Die in dem Versorgungszustandsanalysator 5 erzeugte Regelgröße Heizkreis- oder Gebäudeversorgungszustand BST wird anschließend dem Versorgungszustandsadaptionsmodul 6 zugeleitet. Aufgabe des Versorgungszustandsadaptionsmoduls 6 ist die Ermittlung des an den aktuellen Gebäudewärmebedarf optimal adaptierten Sollwertes der Vorlauftemperatur $VLT_s$. Das Versorgungszustandsadaptionsmodul 6 gemäß einer ersten Ausführungsform ist im Detail in Fig. 8 dargestellt.

Die Eingangsgrößen des Versorgungszustandsadaptionsmoduls 6 sind der Sollwert $BST_s$ und der aktuelle Berechnungswert der Regelgröße Heizkreis- oder Gebäudeversorgungszustand BST. Die Wählbarkeit des Sollwertes des Heizkreis- oder Gebäudeversorgungszustandes $BST_s$ erlaubt eine stärkere Gewichtung entweder des Zustandes "Überversorgung" (entspricht positiven Sollwerten) oder "Unterversorgung" (entspricht negativen Sollwerten). Mit der Wahl des Sollwertes Null wird eine ideale Balance zwischen beiden Zuständen erreicht.

Zur Ausfilterung hochfrequenter Bestandteile wird der aktuelle Berechnungswert der Regelgröße Heizkreis- oder Gebäudeversorgungszustand BST auf ein Filter 18 mit bspw. gleitender Mittelwertbildung geschaltet.

Der gefilterte Heizkreis- oder Gebäudeversorgungszustand BST wird in einem Differenzmodul 19 mit dem Sollwert des Heizkreis- oder Gebäudeversorgungszustandes $BST_s$ verglichen und die Regelabweichung des Heizkreis- oder Gebäudeversorgungszustandes $\Delta_{BST}$ auf einen Regler 20 geschaltet, der vorzugsweise als Adaptiv-Regler aus dieser Regelabweichung $\Delta_{BST}$ eine Stellgröße berechnet, die dem aktuellen Sollwert $VLT_s$ für die Wärmeleistungsregelung 7, insbesondere für die Vorlauftemperatur und/oder den Massenstrom, entspricht. Als Algorithmus des Reglers kann sowohl ein klassischer P-, besser ein PI- oder PID-Algorithmus, aber auch bspw. ein PI-Zustandsalgorithmus eingesetzt werden. Besonders zweckmäßig ist der Einsatz parameteradaptiver Algorithmen, die stets eine hohe Regelgüte ermöglichen.

Um die Zeitdauer des Einfahrprozesses des Reglers 20 in den optimalen Arbeitspunkt nach Einschaltung zu verkürzen, wird der Startwert des Sollwertes $VLT_s$ aus dem außentemperaturgeführten Sollwert VLT' gemäß einer Heizungsfahrkurve 21 unter Berücksichtigung der aktuellen Außentemperatur $\vartheta_A$ berechnet. Dafür kann im einfachsten Fall eine der in Fig. 1 gezeigten Heizungsfahrkurven verwendet werden.

Um eine qualitativ bessere Heizungsfahrkurve 21 zu erhalten, ist jedoch vorgesehen, dass die Heizungsfahrkurve 21 möglichst optimal an den typischen Heizkreis- oder Gebäudewärmebedarf angepasst wird, indem nach einem abgeschlossenen Einfahrprozess des Reglers 20 diese Heizungsfahrkurve 21 in bestimmten Außentemperaturstützstellen (bspw. in Ein-Grad-Schritten im Bereich von -15 bis +15°C) unter Berücksichtigung der Reglerstellgrößen, die dem optimalen Sollwert $VLT_s$ entsprechen, interpolierend optimiert wird. Dadurch wird eine nicht-lineare instationäre und speziell adaptierte Fahrkurvenkorrektur erzeugt, die sowohl als Startwert bei einem Neustart des Reglers 20 bspw. zu Beginn einer Heizperiode oder bei dem Ausfall des Kommunikationssystems der Einzel-Raumtemperaturregelungen 3 eingesetzt werden kann. So wird das Verhalten der Gebäudeheizungsanlagen 2 weiter optimiert.

Der Einfahrprozess des Reglers 20 kann bspw. als abgeschlossen betrachtet werden, wenn die Regelabweichung des Heizkreis- oder Gebäudeversorgungszustandes $\Delta_{BST}$ eine Restschwingung aufweist, deren Amplitude kleiner ist als ein parametrierbarer Wert von bspw. 5 %.

Der Startzustand der Heizungsfahrkurve 21 kann bspw. nach folgender Beziehung berechnet werden:

$$VLT_S = RLT_S + (VLT_{MAX} - RLT_S) \cdot \left( \frac{RLT_S - \vartheta_A}{RLT_S - \vartheta_{A,Auslegung}} \right)^{1/n},$$

mit

| | |
|---|---|
| $VLT_S$ | aktueller Sollwert für die Wärmeleistungsregelung; |
| $VLT_{MAX}$ | Auslegungssollwert für die Wärmeleistungsregelung; |
| $RLT_S$ | typischer Sollwert der Raumtemperatur [°C]; |
| $\vartheta_A$ | aktueller Wert der Außentemperatur [°C]; |
| $\vartheta_{A,Auslegung}$ | Auslegungswert der Außentemperatur [°C]; |
| n | mittlerer Heizkörperexponent [-]. |

Es ist ausreichend, die gebäudespezifischen Auslegungswerte ($VLT_{MAX}$, $RLT_S$, $\vartheta_{A,Auslegung}$, n) nur annähernd zu bestimmen, da die Versorgungszustandsregelung 6 automatisch eine Korrektur des Vorlauftemperatursollwertes

$VLT_s$ berechnet.

Der von dem Regler 20 erzeugte Sollwert $VLT_s$ wird der Wärmeleistungsregelung 7 zugeführt, die daraus die Stellgröße $U_{HZG}$ für einen Wärmeerzeuger 8, bspw. einen Brenner mit Kessel, oder einen Wärmeübertrager 8, bspw. einer Fernwärmeversorgung, erzeugt.

Für Gebäudeheizungsanlagen 2, deren Regelungstechnik die externe Aufschaltung eines Sollwertes $VLT_S$ für ihre Wärmeleistungsregelung 7 nicht ermöglicht, jedoch die Aufschaltung eines Korrektursignals zulässt, ist der Regelalgorithmus des Versorgungszustandsadaptionsmoduls 6 erfindungsgemäß derart, dass anstelle des Sollwertes $VLT_S$ ein instationärer Korrekturwert $\Delta_{VLT}$ für die Wärmeleistungsregelung 7 zu dem externen Sollwertes $S_0$ der Basis-Heizungsfahrkurve 23 eines zur Heizungsanlage 2 gehörenden Wärmeleistungsreglers 22, bspw. einem Heizungsregler, berechnet wird. Dieser Heizungsregler 22 verwendet zur Regelung bspw. die Vorlauftemperatur $\vartheta_{HVL}$ und die Außentemperatur $\vartheta_A$.

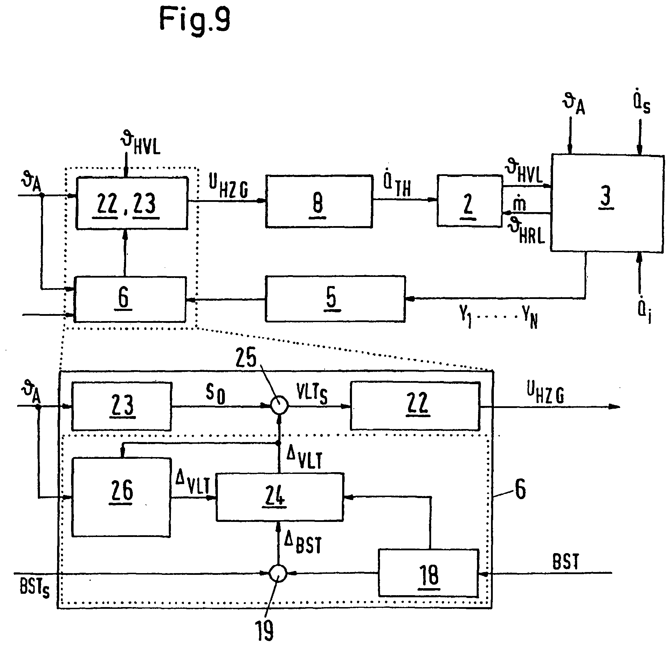

Die Funktionsweise ist in Fig. 9 im Detail dargestellt, wobei die mit Fig. 8 übereinstimmenden Elemente mit denselben Bezugszeichen dargestellt und nicht weiter erläutert werden. Der erfindungsgemäße Regler 24 des Versorgungszustandsadaptionsmoduls 6 ist in Abwandlung des Reglers 20 so ausgebildet, dass er in Abhängigkeit von der Regelabweichung $\Delta_{BST}$ nicht den Sollwert $VLT_S$ ausgibt, sondern die als Korrekturwert dienende Differenz $\Delta_{VLT}$ zu einem Sollwert $S_0$ der außentemperaturgesteuerten Basis-Heizungsfahrkurve 23, die mit dem Wärmeleistungsregler 22 verbunden ist. Der von dem Regler 24 erzeugte Korrekturwert $\Delta_{VLT}$ wird in einem Summiermodul 25 zu dem Sollwert $S_0$ der Basis-Heizungsfahrkurve 23 addiert, sodass dem Wärmeleistungsregler 22 der richtige Sollwert $VLT_S$ für die Wärmeleistungsregelung zugeführt wird.

Für die automatische Anpassung der Regelparameter, wie etwa der Regelverstärkung, können bekannte parameteradaptive Algorithmen eingesetzt werden. Zur Beschleunigung des Einfahrprozesses der Wärmeleistungsadaption kann auf diesen Regler 24 ein Startwert aufgeschaltet werden, der aus einer instationären Fahrkurvenkorrekturfunktion 26 ermittelt wird. Der außentemperaturabhängige Verlauf der Fahrkurvenkorrekturfunktion 26 kann in Analogie zu dem Verfahren nach Fig. 8 nach Abschluss des Einfahrprozesses durch interpolierende Auswertung der Reglerstellgrößen zwischen vorgegebenen Außentemperaturstützstellen optimiert werden. Der Startwert der Fahrkurvenkorrekturfunktion 26 sollte vor Beginn der Optimierung für alle gewählten Außentemperaturstützstellen Null betragen.

Alternativ kann erfindungsgemäß bei Kenntnis der Basis-Heizungsfahrkurve 23 aus der Fahrkurvenkorrekturfunktion 26 und der Basis-Heizungsfahrkurve 23 eine korrigierte Heizungsfahrkurve gebildet werden. Dazu ist zusätzlich zu der bereits beschriebenen instationären adaptierten Fahrkurvenkorrekturfunktion 26 der Heizungsfahrkurve auch die Basis-Heizungsfahrkurve 23 in dem Modul mit der Fahrkurvenkorrekturfunktion 26 abrufbar, sodass diese dem Regler 24 zur Verfügung steht.

Mit dem erfindungsgemäßen Verfahren zur Adaption der Wärmeleistung in Heizungsanlagen 2 und der Vorrichtung zu seiner Durchführung wird also ein den aktuellen Heizkreis- oder Gebäudewärmebedarf berücksichtigender, adaptierter Sollwert $VLT_S$ für die nachgeschaltete Wärmeleistungsregelung 7, 22 als Stellgröße der Versorgungszustandsregelung 6 abgeleitet, dessen Ziel es ist, die Regelgröße Heizkreis- oder Gebäudeversorgungszustand BST auf einen wählbaren Sollwert $BST_S$ zu regeln. Dadurch wird eine Heizungsregelung erreicht, die optimal an den tatsächlichen Heizkreis- oder Gebäudewärmebedarf angepasst ist und durch eine entsprechende Regelung der Vorlauftemperatur oder des Massenstroms der Heizungsanlage 2 einen hohen Komfort bei vermindertem Energieverbrauch erreicht.

**Bezugszeichenliste:**

1 Regelkreis
2 Heizungsanlage
3 Raumtemperaturregelungen
4 Wärmeleistungsadaptionsmodul
5 Versorgungszustandsanalysator
6 Versorgungszustandsadaptionsmodul, Versorgungszustandsregelung
7 Wärmeleistungsregelung
8 Wärmeleistungsübertrager oder -erzeuger
9 Bewertungsmodule
10 Mittlungsmodul für Überversorgungszustände
11 Mittlungsmodul für Unterversorgungszustände
12 Logikmodul für Überversorgungszustände
13 Logikmodul für Unterversorgungszustände
14 Fuzzy-Inferenz
15 Regelbasis

16    Aggregation
17    Defuzzyfizierung
18    Filter
19    Differenzmodul
20    Regler
21    Heizungsfahrkurve
22    Wärmeleistungsregler
23    Basis-Heizungsfahrkurve
24    Regler
25    Summiermodul
26    Fahrkurvenkorrekturfunktion

100    Regelkreis nach dem Stand der Technik
101    Maximumanalysator
102    Sollwertberechnungseinheit
103    Filter

$\vartheta_A$    Außentemperatur
$\vartheta_{HVL}$    Vorlauftemperatur
$\vartheta_{HRL}$    Rücklauftemperatur
$\dot{m}$    Massenstrom
$\dot{Q}_s$    solare Wärmeleistung
$\dot{Q}_i$    interne Wärmeleistung
$\dot{Q}_{TH}$    Heizungswärmeleistung
Y    Hubposition, Ventilstellung
$U_{HZG}$    Stellgröße
$\mu$    Zugehörigkeitsfunktionswerte
BST    Heizkreis- oder Gebäudeversorgungszustand
$BST_s$    Heizkreis- oder Gebäudeversorgungszustand-Sollwert
$\Delta_{BST}$    Regelabweichung BST
$VLT_s$    Sollwert für die Wärmeleistungsregelung
$\Delta_{VLT}$    Korrekturwert
$S_0$    externer Sollwert der Basis-Heizungsfahrkurve

## Patentansprüche

1.    Verfahren zur Adaption der Wärmeleistung in Heizungsanlagen (2) mittels einer Wärmeleistungsregelung (7) der Heizungsanlage (2), deren Wärmeleistung (7) die externe Aufschaltung eines Sollwertes nicht ermöglicht, jedoch die Aufschaltung eines Korrektursignals ($\Delta_{VLT}$) zulässt, insbesondere durch Variation von Vorlauftemperatur ($\vartheta_{HVL}$) und/oder Massenstrom ($\dot{m}$), wobei ein den Wärmebedarf der Räume berücksichtigender Heizkreis- oder Gebäudeversorgungszustand (BST) und daraus ein Korrekturwert ($\Delta_{VLT}$) für die Wärmeleistungsregelung (7) ermittelt wird, **dadurch gekennzeichnet, dass** eine Versorgungszustandsregelung, insbesondere ein Versorgungszustandsadaptionsmodul (6), vorgesehen ist, wodurch der Heizkreis- oder Gebäudeversorgungszustand (BST) als Regelgröße mit einem vorgebbaren Sollwert, der zeitabhängig variiert werden kann, für den Heizkreis- oder Gebäudeversorgungszustand ($BST_S$) verglichen und in eine Stellgröße der Versorgungszustandsregelung umgerechnet wird, welche den Korrekturwert ($\Delta_{VLT}$) für die Wärmeleistungsregelung als Korrekturwert des Sollwertes einer Basis-Heizungsfahrkurve der Wärmeleistungsregelung (7) bildet, wobei der Heizkreis- oder Gebäudeversorgungszustand (BST) aus der Hubposition (Y) der Stellventile aller zur raumweisen Regelung der Raumtemperatur beitragenden Heizelemente des Heizkreises oder Gebäudes abgeleitet wird.

2.    Verfahren nach Anspruch 1, **dadurch gekennzeichnet, dass** aus der Hubposition (Y) der Stellventile der einem Raum zugeordneten Heizelemente mit einer Bewertungsfunktion je ein Raumversorgungszustand berechnet und aus den Raumversorgungszuständen entsprechend einer vorgegebenen Logik der Heizkreis- oder Gebäudeversorgungszustand (BST) ermittelt wird.

3.    Verfahren nach Anspruch 2, **dadurch gekennzeichnet, dass** die Raumversorgungszustände in Über- und Unterversorgungszustände eingeteilt und separat insbesondere gewichtet gemittelt werden.

4. Verfahren nach Anspruch 2 oder 3, **dadurch gekennzeichnet, dass** die Raumversorgungszustände mit einer Fuzzy-Zugehörigkeitsfunktion bewertet werden und die Regelgröße Heizkreis- oder Gebäudeversorgungszustand (BST) durch nachfolgende Fuzzy-Inferenzbildung (14) und Defuzzyfizierung (17), vorzugsweise mittels einer Schwerpunktmethode, berechnet wird.

5. Verfahren nach Anspruch 3 oder 4, **dadurch gekennzeichnet, dass** die Unterversorgungszustände stärker gewichtet werden als die Überversorgungszustände.

6. Verfahren nach einem der vorhergehenden Ansprüche, **dadurch gekennzeichnet, dass** der ermittelte Wert des Heizkreis- oder Gebäudeversorgungszustands (BST) vorzugsweise durch gleitende Mittelwertbildung gefiltert wird.

7. Verfahren nach einem der vorhergehenden Ansprüche, **dadurch gekennzeichnet, dass** in einem Regler (20, 24) der Versorgungszustandsregelung (6), insbesondere einem P-, PI-, PID- oder PI-Zustands-Regler mit parameteradaptiven Algorithmen, aus der Regelabweichung ($\Delta_{BST}$) zwischen einem vorgebbaren Sollwert des Heizkreis- oder Gebäudeversorgungszustands ($BST_S$) und dem ermittelten Wert des Heizkreis- oder Gebäudeversorgungszustands (BST) als Korrekturwert ($\Delta_{VLT}$) für die Wärmeleistungsregelung (7) ein Vorlauftemperatur- oder Massenstromsollwert ermittelt wird.

8. Verfahren nach einem der vorhergehenden Ansprüche, **dadurch gekennzeichnet, dass** der Startwert für den Korrekturwert ($\Delta_{VLT}$) der Wärmeleistungsregelung (7) aus einer außentemperaturgeführten Fahrkurvenkorrekturfunktion (26) ermittelt wird.

9. Verfahren nach Anspruch 8, **dadurch gekennzeichnet, dass** die außentemperaturgeführte Fahrkurvenkorrekturkorrekturfunktion (26) nach abgeschlossenem Einfahrprozess der Versorgungszustandsregelung (6) optimiert wird, insbesondere durch interpolierende Berücksichtigung der dem optimalen Korrekturwert ($\Delta_{VLT}$) für die Wärmelei-stungsregelung (7) entsprechenden Stellgrößen.

10. Verfahren nach einem der vorhergehenden Ansprüche, **dadurch gekennzeichnet, dass** bei mehreren Heizkreisen einer Heizungsanlage (2) von der Versorgungszustandsregelung (6) je ein Korrekturwert ($\Delta_{VLT}$)für die Wärmelei-stungsregelung (7) für jeden Heizkreis und/oder ein gemeinsamer Korrekturwert ($\Delta_{VLT}$)für die Wärmeleistungsrege-lung (7) für die gesamte Heizungsanlage (2) ermittelt wird.

11. Vorrichtung zur Durchführung des Verfahrens nach einem der vorhergehenden Ansprüche, mit einer Wärmeleistungsregelung (7) zur Vorgabe von Vorlauftemperatur ($\vartheta_{HVL}$) und/oder Massenstrom ($\dot{m}$) einer Heizungsanlage (2), welche die externe Aufschaltung eines Sollwertes nicht ermöglicht, jedoch die Aufschaltung eines Korrektursignals ($\Delta_{VLT}$) zulässt, wobei ein Versorgungszustandsanalysator (5) dazu eingerichtet ist, einen den Wärmebedarf der Räume berücksichtigenden Heizkreis- bzw. Gebäudeversorgungszustand (BST) zu ermitteln, und wobei daraus ein Korrekturwert ($\Delta_{VLT}$) für die Wärmeleistungsregelung (7) ermittelt wird, **gekennzeichnet durch** eine Versorgungszustandsregelung, insbesondere ein Versorgungszustandsadaptionsmodul (6), wodurch der Heizkreis- bzw. Gebäudeversorgungszustand (BST) als Regelgröße mit einem vorgebbaren Sollwert, der zeitabhängig variiert werden kann, für den Heizkreis- bzw. Gebäudeversorgungszustand ($BST_S$) verglichen und in eine Stellgröße der Versorgungszustandsregelung umgerechnet wird, welche den Korrekturwert ($\Delta_{VLT}$) für die Wärmeleistungsregelung (7) als Korrekturwert des Sollwerts einer Basis-Heizungsfahrkurve der Wärmeleistungsregelung (7) bildet und wobei der Versorgungszustandsanalysator (5) zur Ermittlung eines Heizkreis- oder Gebäudeversorgungszustands (BST) aus der Hubposition (Y) der Stellventile aller zur raumweisen Regelung der Raumtemperatur beitragenden Heizelemente des Heizkreises öder Gebäudes eingerichtet ist.

12. Vorrichtung nach Anspruch 11, **gekennzeichnet durch** eine Kommunikationsverbindung mit mindestens einer elektronischen Einzelraumregelung (3) oder mindestens einem Stellventil eines Heizelements.

13. Vorrichtung nach einem der Ansprüche 11 bis 12, **gekennzeichnet durch** einen Außentemperatursensor.

14. Vorrichtung nach einem der Ansprüche 11 bis 13, **dadurch gekennzeichnet, dass** sie an einen Korrektursignalanschluss eines externen Wärmeleistungsreglers (22), insbesondere eines Vorlauftemperatur- oder Volumenstromreglers, anschließbar ist.

**Claims**

1. A method of adapting the thermal output in heating installations (2) by means of a thermal output control system (7) of the heating installation (2), the thermal output (7) whereof does not enable the external switching-in of a set value, but permits the switching-in of a correction signal ($\Delta_{VLT}$), in particular by varying flow temperature ($\vartheta_{HVL}$) and/or mass flow (m), wherein a heating circuit or building supply state (BST) which takes account of the heat requirement of the rooms and therefrom a correction value ($\Delta_{VLT}$) for the thermal output control system (7) is determined, **characterised in that** a supply state control system, in particular a supply state adaptation module (6), is provided, as a result of which a heating circuit or building supply state (BST) is compared as a control parameter with a predefinable set value, which can be varied in a time-dependent manner, for the heating circuit or building supply state ($BST_S$) and is converted into a control parameter of the supply state control system, which forms the correction value ($\Delta_{VLT}$) for the thermal output control system as a correction value of the set value of a basic heating operation curve of the thermal output control system (7), wherein the heating circuit or building supply state (BST) is derived from the stroke position (Y) of the control valves of all the heating elements of the heating circuit or building which help to control the room temperature on a room-by-room basis.

2. The method according to claim 1, **characterised in that** a room supply state is in each case calculated from the stroke position (Y) of the control valves of the heating elements assigned to a room by means of an evaluation function, and the heating circuit or building supply state (BST) is determined from the room supply states according to a predefined logic.

3. The method according to claim 2, **characterised in that** the room supply states are split into oversupply states and undersupply states and averaged separately, in particular in a weighted manner.

4. The method according to claim 2 or 3, **characterised in that** the room supply states are evaluated by means of a fuzzy membership function and the control parameter of heating circuit or building supply state (BST) is calculated by subsequent fuzzy inferencing (14) and defuzzifying (17), preferably by means of a centre of gravity method.

5. The method according to claim 3 or 4, **characterised in that** the undersupply states are weighted to a greater extent than the oversupply states.

6. The method according to any one of the preceding claims, **characterised in that** the determined value of the heating circuit or building supply state (BST) is preferably filtered by sliding averaging.

7. The method according to any one of the preceding claims, **characterised in that**, in a controller (20, 24) of the supply state control system (6), in particular a P, PI, PID or PI state controller with parameter-adaptive algorithms, a flow temperature or mass flow set value is determined from the control deviation ($\Delta_{BST}$) between a predefinable set value of the heating circuit or building supply state ($BST_S$) and the determined value of the heating circuit or building supply state (BST) as the correction value ($\Delta_{VLT}$) for the thermal output control system (7).

8. The method according to any one of the preceding claims, **characterised in that** the start value for the correction value ($\Delta_{VLT}$) of the thermal output control system (7) is determined from an operation curve correction function (26) which is guided by outside temperature.

9. The method according to claim 8, **characterised in that** the operation curve correction function (26) which is guided by outside temperature is optimised once the running-in process of the supply state control system (6) is completed, in particular by taking account, in an interpolating manner, of the control parameters corresponding to the optimal correction value ($\Delta_{VLT}$) for the thermal output control system (7).

10. The method according to any one of the preceding claims, **characterised in that**, if there are a number of heating circuits of a heating installation (2), in each case a correction value ($\Delta_{VLT}$) for the thermal output control system (7) is determined for each heating circuit and/or a common correction value ($\Delta_{VLT}$) for the thermal output control system (7) is determined for the entire heating installation (2), by the supply state control system (6).

11. A device for carrying out the method according to any one of the preceding claims, comprising a thermal output control system (7) for predefining the flow temperature ($\vartheta_{HVL}$) and/or mass flow (m) of a heating installation (2), which does not enable the external switching-in of a set value, but permits the switching-in of a correction signal ($\Delta_{VLT}$), wherein a supply state analyser (5) is designed to determine a heating circuit or building supply state (BST) which takes account of the heat requirement of the rooms, and wherein a correction value ($\Delta_{VLT}$) for the thermal output control system (7) is determined therefrom, **characterised by** a supply state control system, in particular a supply state adaptation module (6), as a result of which the heating circuit or building supply state (BST) is compared as a control parameter with a predefinable set value, which can be varied in a time-dependent manner, for the heating circuit or building supply state ($BST_S$) and is converted into a control parameter of the supply state control system, which forms the correction value ($\Delta_{VLT}$) for the thermal output control system (7) as a correction value of the set value of a basic heating operation curve of the thermal output control system (7) and wherein the supply state analyser (5) is set up for determining a heating circuit or building supply state (BST) from the stroke position (Y) of the control valves of all the heating elements of the heating circuit or building which help to control the room temperature on a room-by-room basis.

12. The device according to claim 11, **characterised by** a communication link to at least one electronic individual room control system (3) or at least one control valve of a heating element.

13. The device according to any one of claims 11 to 12, **characterised by** an outside temperature sensor.

14. The device according to any one of claims 11 to 13, **characterised in that** it can be connected to a correction signal terminal of an external thermal output controller (22), in particular a flow temperature or volume flow controller.

**Revendications**

1. Procédé pour adapter la puissance thermique dans des installations de chauffage (2) au moyen d'une régulation de la puissance thermique (7) de l'installation de chauffage (2), dont la puissance thermique (7) ne permet pas la mise en ligne d'une valeur théorique, qui admet cependant la mise en ligne d'un signal de correction ($\Delta_{VLT}$), notamment en faisant varier la température de la canalisation montante ($\vartheta_{HVL}$) et/ou le flux massique ($\dot{m}$), un état d'alimentation du circuit de chauffage ou du bâtiment (BST) tenant compte des besoins thermiques des pièces et une valeur de correction ($\Delta_{VLT}$) pour la régulation de la puissance thermique (7) étant déterminés sur cette base, **caractérisé en ce qu'**il est prévu une régulation d'état d'alimentation, notamment un module d'état d'adaptation d'état d'alimentation (6), grâce à laquelle l'état d'alimentation du circuit de chauffage ou du bâtiment (BST) est comparé en tant que valeur de régulation à une valeur théorique pouvant être définie modifiable en fonction du temps pour l'état d'alimentation du circuit de chauffage ou du bâtiment ($BST_S$) et est converti en une grandeur de régulation de la régulation de l'état d'alimentation, laquelle forme la valeur de correction ($\Delta_{VLT}$) pour la régulation de la puissance thermique en tant que valeur de correction de la valeur théorique d'une courbe d'évolution de chauffage de base de la régulation de puissance thermique (7), l'état d'alimentation du circuit de chauffage ou du bâtiment (BST) étant déduit de la position (Y) des soupapes de réglage de tous les éléments de chauffage du circuit de chauffage ou du bâtiment contribuant à la régulation pièce par pièce de la température des pièces.

2. Procédé selon la revendication 1, **caractérisé en ce qu'**à partir de la position (Y) des soupapes de soupapes de réglage des éléments de chauffage attribués à une pièce, on calcule avec une fonction d'évaluation un état d'alimentation de pièce et on détermine à partir des états d'alimentation de pièce selon une logique prédéfinie, l'état d'alimentation du circuit de chauffage ou du bâtiment (BST).

3. Procédé selon la revendication 2, **caractérisé en ce que** les états d'alimentation de pièce sont répartis en états de suralimentation et de sous-alimentation et leurs moyennes sont établies séparément, notamment de manière pondérée.

4. Procédé selon la revendication 2 ou 3, **caractérisé en ce que** les états d'alimentation de pièce sont évalués avec une fonction d'appartenance floue et la grandeur de régulation état d'alimentation du circuit de chauffage ou du bâtiment (BST) est calculée ensuite par formation interférentielle floue (14) et défuzzification (17), de préférence au moyen d'une méthode de centre de gravité.

5. Procédé selon la revendication 3 ou 4, **caractérisé en ce que** les états de sous-alimentation sont plus fortement pondérés que les états de suralimentation.

6. Procédé selon l'une quelconque des revendications précédentes, **caractérisé en ce que** la valeur déterminée de l'état d'alimentation du circuit de chauffage ou du bâtiment (BST) est filtrée de préférence par calcul glissant de la moyenne.

**7.** Procédé selon l'une quelconque des revendications précédentes, **caractérisé en ce que** dans un régulateur (20, 24) de la régulation de l'état d'alimentation (6), notamment dans un régulateur P-PI-, PID- ou un régulateur d'état PI avec des algorithmes adaptatifs par paramètres, une valeur théorique de la température de la canalisation montante ou du flux massique est déterminée à partir du déréglage ($\Delta_{BST}$) entre une valeur théorique pouvant être prédéfinie de l'état d'alimentation du circuit de chauffage et du bâtiment ($BST_S$) et la valeur déterminée de l'état d'alimentation du circuit de chauffage ou du bâtiment (BST) sous la forme d'une valeur de correction ($\Delta_{VLT}$) pour la régulation de la puissance thermique (7).

**8.** Procédé selon l'une quelconque des revendications précédentes, **caractérisé en ce que** la valeur initiale de la valeur de correction ($\Delta_{VLT}$) de la régulation de la puissance thermique (7) est déterminée à partir d'une fonction de correction de la courbe d'évolution (26) guidée en fonction de la température extérieure.

**9.** Procédé selon la revendication 8, **caractérisé en ce que** la fonction de correction de la courbe d'évolution guidée en fonction de la température extérieure (26) est optimisée après achèvement de la procédure de mise en route de la régulation d'état d'alimentation (6), notamment par la prise en compte interpolante des grandeurs de régulation correspondant à la valeur de correction optimale ($\Delta_{VLT}$) pour la régulation de la puissance thermique (7).

**10.** Procédé selon l'une quelconque des revendications précédentes, **caractérisé en ce que**, en cas de pluralité de circuits de chauffage dans une installation de chauffage (2), la régulation de l'état d'alimentation (6) détermine pour chaque circuit de chauffage une valeur de correction ($\Delta_{VLT}$) pour la régulation de la puissance thermique (7) et/ou détermine pour l'ensemble de l'installation de chauffage (2) une valeur de correction commune ($\Delta_{VLT}$) pour la régulation de la puissance thermique (7).

**11.** Dispositif pour la mise en oeuvre du procédé selon l'une quelconque des revendications précédentes, avec une régulation de la puissance thermique (7) pour fixer la température de la canalisation montante ($\vartheta_{HVL}$) et/ou du flux massique (m) d'une installation de chauffage (2), lequel ne permet pas la mise en ligne externe d'une valeur théorique, admet toutefois la mise en ligne d'un signal de correction ($\Delta_{VLT}$), un analyseur d'état d'alimentation (5) étant agencé pour déterminer un état d'alimentation du circuit de chauffage ou du bâtiment (BST) tenant compte des besoins thermiques des pièces et une valeur de correction ($\Delta_{VLT}$) étant déterminée sur cette base pour la régulation de la puissance thermique (7), **caractérisé par** une régulation de l'état d'alimentation, notamment un module d'adaptation d'état d'alimentation (6), grâce à laquelle l'état d'alimentation du circuit de chauffage ou du bâtiment (BST), pris comme grandeur de régulation, est comparé pour l'état d'alimentation du circuit de chauffage ou du bâtiment ($BST_S$) à une valeur théorique pouvant être prédéfinie, modifiable en fonction du temps et est converti en une grandeur de régulation de la régulation de l'état d'alimentation, laquelle forme la valeur de correction ($\Delta_{VLT}$) pour la régulation de la puissance thermique (7) en tant que valeur de correction de la valeur théorique d'une courbe d'évolution du chauffage de base de la régulation de puissance thermique (7) et l'analyseur d'état d'alimentation (5) étant agencé pour déterminer un état d'alimentation du circuit de chauffage ou du bâtiment (BST) à partir de la position (Y) des soupapes de réglage de tous les éléments de chauffage du circuit de chauffage ou du bâtiment contribuant à la régulation pièce par pièce de la température ambiante.

**12.** Dispositif selon la revendication 11, **caractérisé par** une liaison de communication avec au moins un régulateur électronique de pièce individuelle (3) ou au moins une soupape de réglage d'un élément de chauffage.

**13.** Dispositif selon l'une quelconque des revendications 11 à 12, **caractérisé par** un capteur de température externe.

**14.** Dispositif selon l'une quelconque des revendications 11 à 13, **caractérisé en ce qu'**il peut être raccordé à un raccord de signal de correction d'un régulateur de puissance thermique externe (22), notamment d'un régulateur de la température de la canalisation montante ou du flux massique.

# Fig.1

| | |
|---|---|
| 1 | — Nichtlineare Heizkurve, Typ 1 |
| 2 | — Nichtlineare Heizkurve, Typ 2 |
| 3 | — Typische lineare Heizkurve |
| 4 | — Klassische lineare Heizkurve |

# Fig.2

# Fig.3

# Fig.4

# Fig. 5

**Raumversorgungszustand in Abhängigkeit der Ventilstellung**

Ventilstellung [%]

# Fig. 6

**Zugehörigkeitsfunktionen der linguistischen Variable "Gebäudeunterversorgung"**

1 — geringe Unterversorgung
2 — mittlere Unterversorgung
3 — hohe Unterversorgung

Mittelwert des Zustandes "Raum-Unterversorgung"

**Zugehörigkeitsfunktionen der linguistischen Variable "Gebäudeüberversorgung"**

1 — geringe Überversorgung
2 — mittlere Überversorgung
3 — hohe Überversorgung

Mittelwert des Zustandes "Raum-Überversorgung"

## Fig.7

|  | klein | mittel | hoch |
|---|---|---|---|
| Gebäudeunterversorgung | $\mu_{LL}$ | $\mu_{LM}$ | $\mu_{LH}$ |
| Gebäudeüberversorgung | $\mu_{HL}$ | $\mu_{HM}$ | $\mu_{HH}$ |

## Fig.8

# Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0282886 B1
- EP 0308848 B2
- EP 0260343 B1

- DE 3036661 C1
- EP 0594886 A1

**In der Beschreibung aufgeführte Nicht-Patentliteratur**

- **D. PFANNSTIEL.** *Einsatz adaptiver und fuzzy-basierter Regelungsstrategien in der Heizungstechnik,* 1995, 42-49
- Untersuchung verschiedener Regelungskonzepte für Heizungsanlagen mit Brennwertkesseln. **J. OHL.** Dissertation. Technische Universität Darmstadt, 1999

- **S. BAUMGARTH.** Strategien zur energieoptimalen Heizungsregelung. *HLH,* 1991, 315-318
- *Regelungsstrategien für Einzelraumregelung,* 1995, 29-35
- **S. BAUMGARTH.** Einzelraumregelung mit dem EIB. *HLH,* 2000, 42-47